# EUROPEAN PATENT APPLICATION

(11) **EP 1 483 988 A1**
(43) Date of publication of application: **08.12.2004**
(21) Application number: 04252992.5
(22) Date of filing: 21.05.2004
(51) Int. Cl.: A47G 7/02, A47G 7/07

(54) **Solidified barrier-closure for floral arrangements and the like and method of its making**

(30) Priority: 06.06.2003 US 456306
(71) Applicant: Floral Transport Systems, LLC, Miami, Florida 33166 (US)
(72) Inventor: Fishman, Marc, Miami, Florida 33156 (US); Fishman, Yale, Miami, Florida 33157 (US)
(74) Representative: Rees, Alexander Ellison

(57) **Abstract**

A floral arrangement (10) is provided for supporting nutrient-receiving floral projections (22) within a sealed liquid solution-filled portion of a container (12). The arrangement (10) incorporates a free-forming solidifying composition (36) adjacent to the opening of the container (12), which solidifies to firmly hold the floral projections (22) in place, and to create a spill-proof protective barrier between the liquid solution (32) and a surrounding environment. The arrangement (10) is particularly useful for applications, wherein a soil-free, nutrient-rich environment can be maintained without the need for introducing protective substances into the liquid solution.

## Description

### Field of the Invention

The present invention relates generally to arrangements for holding/securing floral or other botanical groupings. More particularly, the invention relates to an arrangement incorporating a free-forming floral or botanical holding composition solidified to form a sealed closure within a liquid solution-filled container, thereby creating a barrier between an interior of the container and a surrounding environment.

### Description of the Prior Art

It is common practice to sustain the life of cut plants such as flowers by means of positioning of a cut end of a plant stem within a reservoir containing water, or a nutrient liquid. It is also well known to insert the cut stems into diapers, cottons swabs, and other compositions that can be saturated with water or liquid nutrients.

Alternatively, attempts have been made in the prior art to provide various foams and other substances capable of supplying sufficient moisture into which the cut stems of flowers are typically inserted. U.S. Patent Nos. 4,941,572; 5,469,654; 6,055,769; 6,162,273; 6,185,863; and 6,269,611 are illustrative of such arrangements. A typical example of this prior foam material is a floral foam that is used to hold the flowers in an upright position and capable of absorbing liquids, so as to supply same to the flowers. It is well known that a liquid retained by such floral foam is, by itself, easily spilled. Furthermore, the floral foam, when positioned in a floral container or vase, is not capable of preventing spilling of the liquid when the container is overturned.

All of the above makes it exceedingly difficult, if not completely impossible, to ship flowers in floral containers or vases utilizing the floral foam for their support. This is because, the overturning of the container leads to spilling and loss of a liquid, ultimately resulting in the damage to shipping materials and shortened life of the flowers. Still further, the liquid absorbing floral foams are typically provided to the end user in a final pre-arranged solid shape, such as block forms, which have to be cut for positioning within a predetermined configuration of the flower holding dish or vase. Such floral foam positioned within the container is penetrable by outside moisture or air and does not form a barrier protecting or sealing the interior of the container from the contaminant-carrying surrounding environment.

Furthermore, flowers are typically shipped in a so-called "sleeping" state, without any liquid nutrient supply. For instance, this is common during transportation of flowers, e.g., from growers/producers to wholesalers/retailers. It should also be noted that there are some regulatory restrictions preventing shipment of plants, flowers and the like in packages containing soil from foreign growers to their distribution counterparts in the U.S.A. In such transportation arrangements the flowers are shipped in a dry condition without any nutrient-containing liquid. The flowers are actually "put to sleep" during the transportation period and, following transportation, stem ends are cut and placed into water to bring them back to life. Oftentimes, the flowers die or are revived having a less lively appearance. In any event, it is well recognized that this process shortens the life of the cut flowers.

Accordingly, there is a well-established need for an arrangement overcoming the disadvantages, drawbacks and limitations of the prior art. Particularly, it would be desirable to provide an easily fabricated floral or botanical arrangement providing a soil-free continuous supply of nutrients to plants and flowers, even during an extended period of transportation, in order to increase their shelf life. Furthermore, it would be desirable to provide such an arrangement incorporating a free-forming barrier capable of conforming to myriad of configurations of vases and other containers Still further, it would be desirable to provide the arrangement in the form of a spill-proof barrier between a nutrient-supplying volume of liquid and a surrounding environment, so that the formed barrier precludes contamination of a liquid situated in the container. Preferably, the arrangement should incorporate a cost-effective and easily implemented fabrication method for an end user.

### Summary of the Invention

The invention is directed to a floral arrangement, and corresponding fabrication method, for supporting nutrient-receiving stems, roots, bulbs and the like, within a sealed liquid solution-filled portion of a container such that handling, shipping and preservation of corresponding flowers, plants, cuttings and the like, is appreciably improved and simplified. The arrangement incorporates a sealed closure formed of a solidifying composition adjacent to the opening of the container, which firmly holds the nutrient-receiving floral elements in place and creates a spill-proof protective barrier between the liquid solution and a surrounding environment. The arrangement is particularly useful for shipping applications, wherein a soil-free, nutrient-rich environment can be maintained throughout transportation process. In comparison to conventional floral shipping arrangements, the arrangement of the present invention provides for increased shelf life. The free-forming nature of the sealed closure and method enables formation of a cork-type barrier inherently adaptable to conforming to a myriad of different container designs and configurations.

In one aspect of the present invention, a floral arrangement is provided comprising:
a container having a mouth; a volume of liquid solution contained therein and having a top surface; at least one nutrient-receiving floral projection extending through the container mouth and into the volume of liquid solution; and a solidified bonding composition forming a cork-type barrier within the container proximate to the mouth to firmly support the floral projection(s) and substantially seal the volume of liquid solution from the surrounding environment.

In a further aspect of the present invention, a substantially rigid container is provided, having a narrowed, or necked, region adjacent to the mouth, and the solidified barrier-forming composition is bounded by an operational space defined by a top surface of the liquid solution and the interior surface of the narrowed region.

In another aspect of the present invention, a support member having a transverse base portion is positioned inside of the container to define a lower boundary for the barrier-forming composition situated at a distance above the liquid solution surface. The support member includes upwardly extending support arms that can be supportively draped over the vase rim. The transverse base portion may incorporate flexible tab portions configured to temporarily deflect inwardly to enable the horizontal base portion to be squeezed through a narrowed vase portion. Additionally, flexible inner tabs may be provided to facilitate vertically-supported passage of floral stems through the center of the base portion.

In a still further aspect of the present invention, the vase is provided with a sidewall aperture sized for receiving the nozzle portion of a barrier composition dispenser. In this aspect of the invention, the barrier composition is dispensed through the sidewall aperture instead of through the mouth of the vase. During solidification, the dispensed composition effectively plugs the sidewall aperture.

In yet a further aspect of the present invention, a floral arrangement is provided including a plurality of flowers having stem portions extending distally therefrom in a bunched arrangement and each terminating at a cut end. A solidified bonding composition is provided along a length of the stems above and proximate to the cut ends such that the stems are substantially encapsulated within the composition along said length.

Still another aspect of the present invention provides an arrangement wherein the cut ends of the aforementioned bunched stems are contained in a flexible, liquid solution-filled container which might include a strengthening member disposed about its opening. A bonding composition is provided for adhering the stems to the flexible container or strengthening member in order to form a cork-type barrier for sealing the liquid solution from the surrounding environment. An auxiliary clamping member may be provided around the strengthening member.

In a still further aspect of the present invention, a floral arrangement is provided consisting of a flexible bag having an opening; a strengthening member extending about and attached to the periphery of the flexible bag opening; a volume of liquid solution contained within the flexible bag and having a top surface; at least one floral element extends through the bag opening and into the volume of liquid solution. A solidified bonding composition forms a cork-type barrier within the flexible bag proximate to the opening, the composition substantially encapsulates a length of the at least one floral element above the upper surface of the liquid solution and adhesively engages the strengthening member to substantially seal the liquid solution from a surrounding environment.

In yet another aspect of the invention, the strengthening member is provided with a necked, notched, or otherwise irregular interior surface configuration for enhancing engagement with the bonding composition.

In still a further aspect of the invention, the bonding composition is comprised of a free-forming expanding adhesive foam.

In another aspect of the invention, a method of fabricating a floral arrangement is provided comprising the following steps:
providing a container having a mouth; filling the container with a volume of liquid solution having a top surface; inserting at least one nutrient-receiving floral projection through the container mouth and into the volume of liquid solution; and forming a cork-type barrier within the container substantially sealing the volume of liquid solution from a surrounding environment.

In a further aspect of the invention, a method of fabricating a floral arrangement is provided comprising the following steps: providing a bunched grouping of floral stems having cut ends; and forming an encapsulating band of a bonding composition about a lower length of the bunched floral stems above the cut ends.

In still yet another aspect of the method of the invention, the cut ends of the stems are sealed in a liquid solution-filled flexible container. More particularly, the cut ends of the bunched stems are inserted through a container opening having a strengthening member extending thereabout until the cut ends are submerged in the liquid solution. Subsequently, a free forming bonding composition is introduced into the container to adhesively bond the floral stems to the container or strengthening member, thereby forming a cork-like arrangement providing the aforementioned sealing characteristics.

These and other aspects, features, and advantages of the present invention will become more readily apparent from the attached drawings and the detailed description of the preferred embodiments, which follow.

### Brief Description Of The Drawings

The preferred embodiments of the invention will hereinafter be described in conjunction with the appended drawings provided to illustrate and not to limit the invention, where like designations denote like elements, and in which:

FIG. 1 is a front elevation view of a floral arrangement in accordance with one embodiment of the present invention;

FIGS. 2-5 illustrate formation of a floral grouping incorporating an expanded solidified barrier formed within a narrowed region, or neck, of a floral container or a vase, with the front half of the vase cutaway to expose the vase interior, wherein:

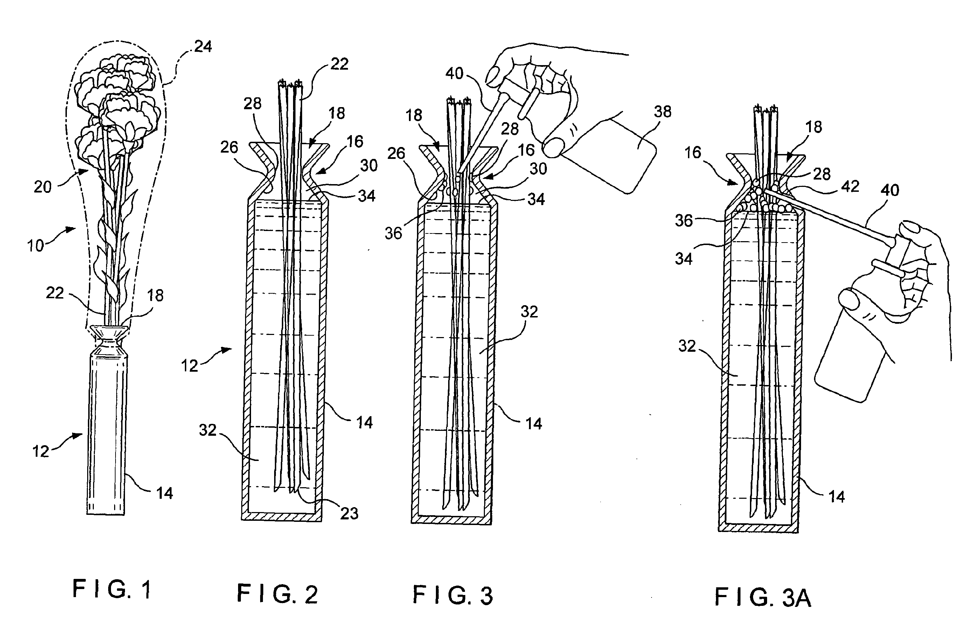

FIG. 2 illustrates the positioning a group of floral elements or stems within the liquid solution-filled vase;

FIG. 3 illustrates the dispensing of an expanding solidifying composition through the mouth of the vase;

FIG. 3A illustrates an alternative arrangement in which the dispensing of the expanding solidifying composition occurs through an aperture in the neck of the vase;

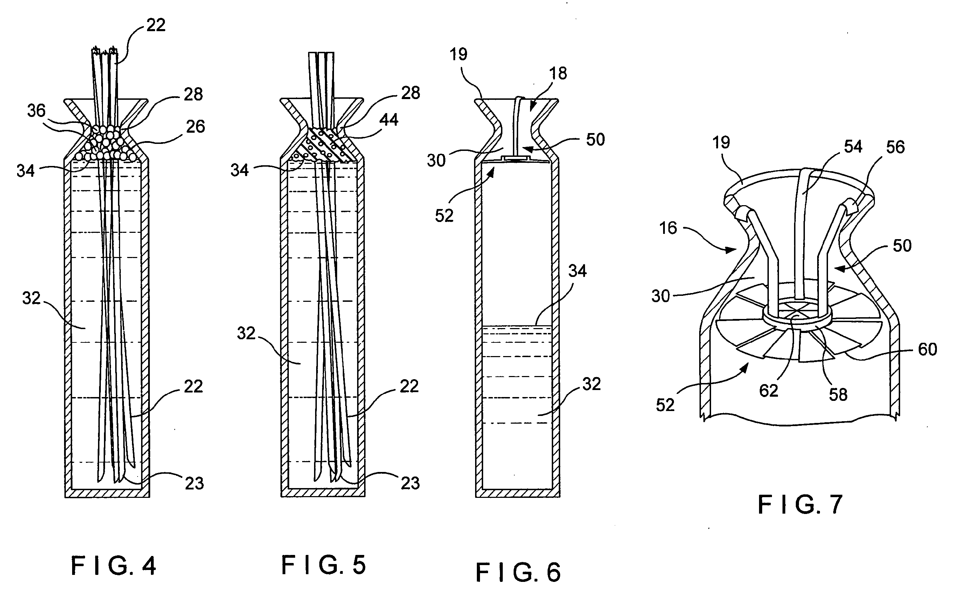

FIG. 4 illustrates the expansion of the dispensed composition;

FIG. 5 illustrates the formation of the composition into an expanded solidified barrier within the neck portion of the vase;

FIGS. 6-11 illustrate formation of a floral grouping in accordance with another aspect of the invention incorporating an auxiliary member for aiding in the positioning of the floral members/elements or stems and providing a transverse base defining a lower boundary during expansion and solidification of the dispensed composition, with the front half of the floral container or vase cutaway to expose the vase interior, wherein:

FIG. 6 is a front elevation view of the auxiliary member shown supported within the neck region of the vase;

FIG. 7 is an enlarged perspective view of the supported auxiliary member in FIG. 6;

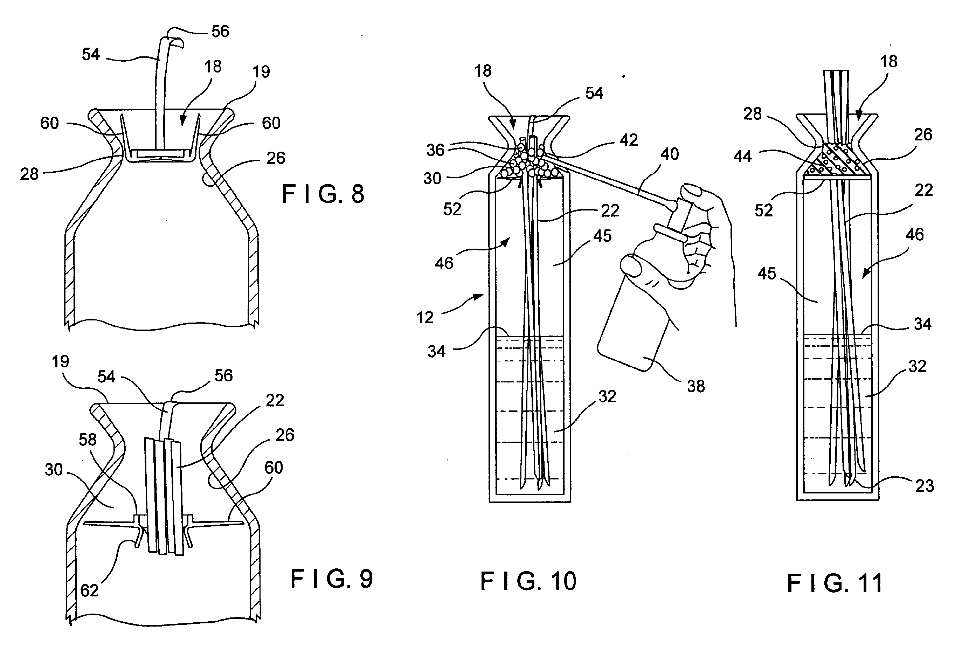

FIG. 8 illustrates the insertion of the auxiliary member through the necked region of the vase;

FIG. 9 illustrates the insertion of a bunched group of floral elements or stems through a central portion of the auxiliary member;

FIG. 10 illustrates the dispensing of the expanding solidifying composition into the necked region of the vase above a transverse base portion of the auxiliary member;

FIG. 11 illustrates the formation of the composition of FIG. 10 into an expanded solidified barrier within the neck portion of the vase supported by the transverse base portion of the auxiliary member;

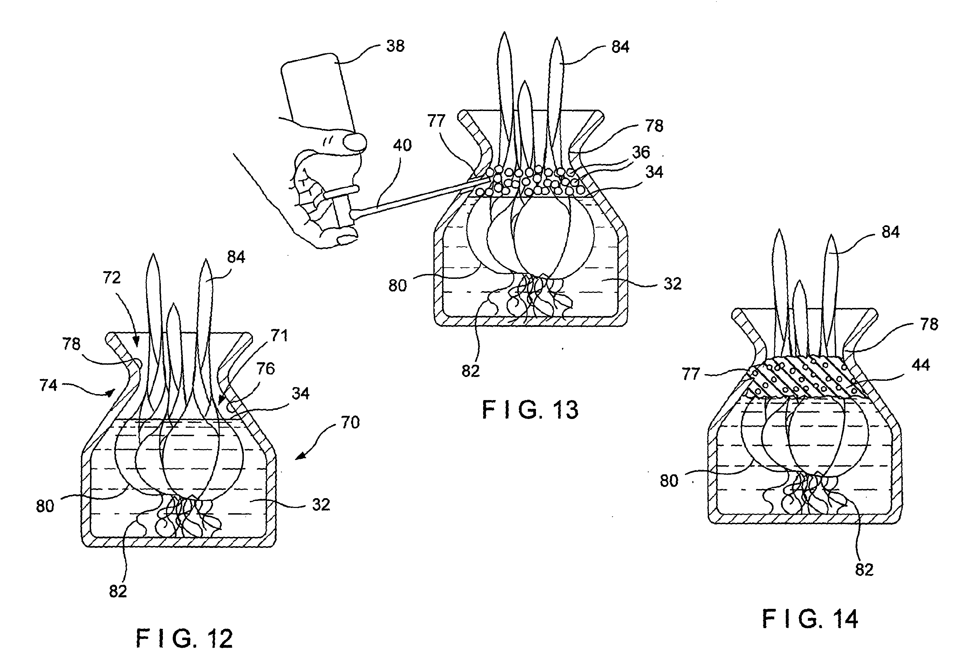

FIGS. 12-14 illustrate the application of the principals of the present invention to the formation of the grouping of floral bulbs within a floral container or vase;

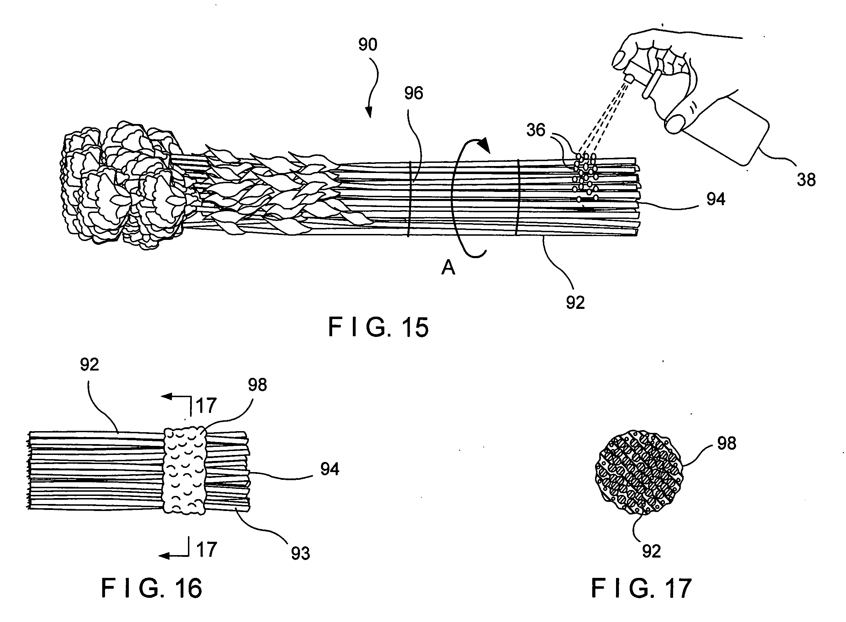

FIGS. 15-17 illustrate the application of an expanding solidifying composition enabling a user to substantially encapsulate a lower section of a grouping of floral elements or stems, in accordance with another aspect of the present invention;

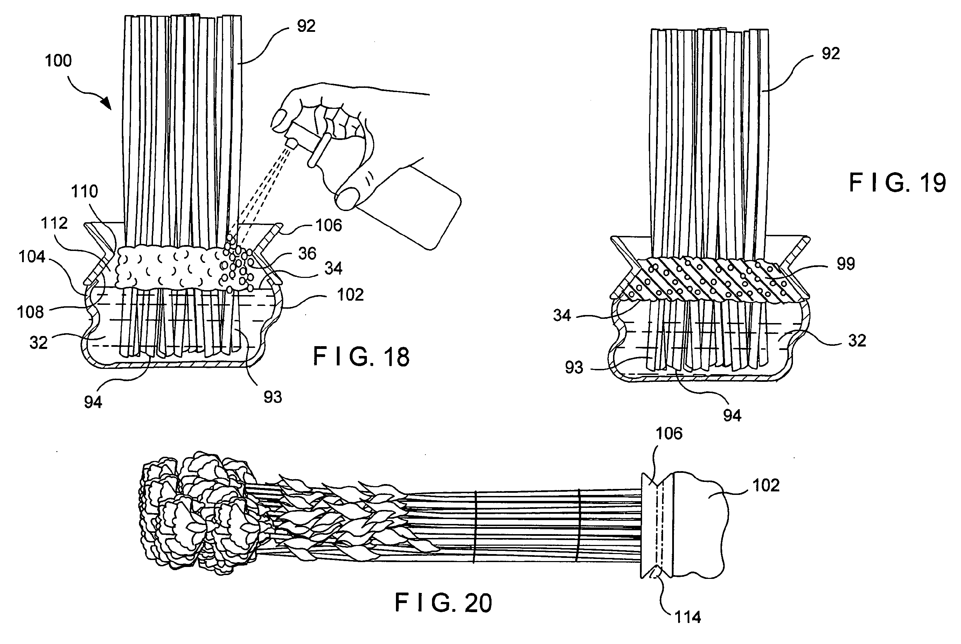

FIGS 18-20 illustrate the sealed containment of the lower portion of the stem grouping within a flexible liquid solution-filled container, in accordance with a further aspect of the present invention;

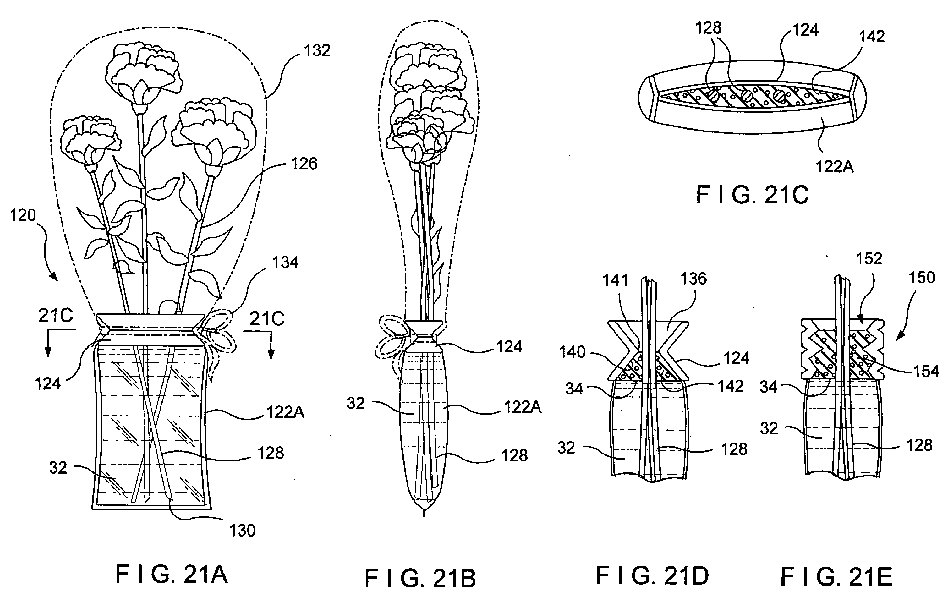

FIGS. 21A-21E illustrate the sealed containment of a group of floral elements or stems within a flexible container.

### Detailed Description Of The Preferred Embodiments

Shown throughout the figures, the present invention is generally directed to floral and other botanical arrangements, and corresponding method of formation, for supporting nutrient-receiving floral projections, such as stems, roots, bulbs and the like, within a sealed liquid solution-filled contained environment such that handling, shipping and preservation of corresponding flowers, plants, bulbs, cuttings and the like, is appreciably improved and simplified.

Referring initially to FIG. 1, a completely assembled floral or botanical arrangement is shown in accordance with a first aspect of the present invention. The arrangement, shown generally as reference numeral **10**, includes a rigid or semi-rigid floral container or vase **12** for holding a plurality of flowers **20** having stems **22**. The container or vase **12** can be constructed from any glass, ceramic, polymer, rubber, metal, composite or other suitable material providing a rigid or semi-rigid structure. The vase has a main body **14** and a mouth **18**, separated by a narrowed, and preferably necked, portion **16**. A protective wrap **24**, or other suitable covering, may be provided for aesthetic purposes and/or to protect the flowers **20** during shipment and handling.

Significantly, the floral or botanical arrangement of the present invention incorporates a sealed closure or cork-type barrier formed within the necked portion **16** of the container or vase **12.** Referring now particularly to FIGS. 2-5, a method for forming the unique sealed closure or cork-type barrier of the invention will now be described.

Referring primarily to FIG. 2, container or vase **12** is filled with water **32**, or any other nutrient-supplying liquid solution. Preferably, the vase **12** is filled such that the top surface **34** of the liquid solution **32**, or the liquid solution level, is at or slightly below inwardly tapering interior surface **26** forming the necked region **16**. In any event, the liquid solution level should be below the narrowest portion **28** of the container or vase. In this manner, an interior operational space **30** adapted to receive the sealed closure of the invention is generally defined by bounding surfaces **34** and **26**. A plurality of flower stems **22** having cut ends **23** are inserted into the liquid solution-filled container or vase through mouth **18**, and preferably supported in a substantially vertical orientation such that the stems are not contacting the vase interior.

Referring now primarily to FIG. 3, a free-forming or free flowing bonding composition 36 is dispensed, or otherwise introduced, into interior space **30** in a flowable state. In the preferred embodiment of the invention bonding composition **36** comprises an expanding foam having adhesive-type qualities, which is introduced into interior operational space **30** through the mouth **18** of vase **12**. In the illustrated embodiment the bonding composition is introduced from a nozzle portion **40** of an aerosol dispensing unit **38**. Alternatively, as shown in FIG. 3A, bonding composition **36** can be dispensed into interior space **30** through a vase sidewall aperture **42**. In that case, upon solidifying, the bonding composition in addition to the formation of the sealed closure within the neck of the vase also substantially seals or plugs the aperture **42** from the surrounding environment.

A variety of compositions of foamable adhesives, glues, resins and the like, that can be employed for use with the present invention. The applicants have found success using an Insulating Foam Sealant manufactured by the Dow Chemical Company. As will be apparent to those skilled in the art, the foam-forming components may include additives to impart desired properties and/or characteristics to the foam barrier. For example, a dye may be added to produce a barrier that is color-coordinated with the exterior of the vase. Additionally, accelerators can be added to the foamed fiber to speed the transition from the flowable state to the rigid/cured state.

Although use of adhesive foam is preferred, it should be readily apparent to those skilled in the art that the invention is in no way intended to be so limiting. The floral or botanical arrangement of the invention can be formed utilizing virtually any composition capable of forming a sealed closure or cork-type arrangement (as further described below) within the neck of the vase, including, but not limited to, glues, gels, gums, resins, cements, and caulking compositions. Furthermore, although aerosol dispensing is described with reference to the preferred embodiments, any means capable of effectively introducing the composition into the floral container or vase is contemplated.

As shown in FIG. 4, the dispensed free flowing bonding composition or foam **36** readily flows and expands, due to a chemical reaction or other gas bubble producing mechanism, to substantially fill operational interior space **30** of necked region **16**. The foam expands upwardly as limited by liquid solution bounding top surface **34** and narrowing, or inwardly tapering, vase bounding surface **26**. Significantly, the foam expands, or otherwise flows, around the stems such that the foam substantially encapsulates the portions of the stems extending through the operational space **30** and the composition **36**. Furthermore, as the foam solidifies, or cures, it substantially adheres to the stems **22** and bounding interior vase surface **26**. During the curing phase, the stems can be manipulated, or repositioned, if desired. As shown in FIG. 5, the foam composition solidifies to a self-sustaining, shape-retaining state firmly holding the stems **22** such that they become inseparable from each other and from the vase. The solidified bonding composition thereby forms a plug or cork-type structure **44** within or below the narrowest portion **28** of the vase, such that it forms an inseparable combination with the interior or the vase. In this manner, a sealed closure or cork-type arrangement is formed creating a barrier acting to properly retain the stems **22**, contain liquid solution **32** and prevent introduction of contaminants from the surrounding environment into the interior of the container. The cut ends **23** of the stems **22** remain submerged in the liquid solution **32** such that the stems continue to function as conduits for carrying water, minerals, sugars and other sustaining nutrients to support the flower buds and leaves.

In addition to the applications for stemmed flowers, as described elsewhere herein, the floral arrangement of the present invention can be employed for use with tulips, lilies, daffodils, onions and other plants that produce bulbs. Bulbs are known to be shortened, compressed, underground stems surrounded by fleshy scales (leaves) that envelop a central bud located at the tip of the stem.

Referring briefly now to FIGS. 12-14, application of the present invention for use with bulb producing plants will now be described. Preferably, a shortened floral container or vase **70** having a mouth **72** and a necked region **74** is partially filled with a nutrient containing liquid solution **32** to a desired level **34** below the narrowest portion **78** of the vase. One or more plant bulbs **80** having extending roots **82** are introduced into the vase and submerged in the liquid solution **32**, such that projecting portions **84** of the plants extend upwardly through vase mouth **72**. Subsequently, a free forming bonding composition, and preferably a foam having adhesive qualities **36**, is dispensed into an interior operational space **71** generally defined by bounding liquid surface **34** and narrowing interior vase surface **76**, for example, through sidewall aperture **77**. As shown in FIG. 14, the adhesive foam **36** solidifies to form a sealed closure or cork-type arrangement in the neck of the vase which also seals the sidewall aperture **77**. It should also be noted that the free forming bonding composition which can be in the form of a foam having adhesive-type qualities can be introduced into the interior space through the mouth of the floral container or vase as previously described with reference to Fig. 3.

In some instances, (see Fig. 11, for example), it may be desirable to provide the barrier or cork-type arrangement of the present invention within a floral container or vase having a liquid solution surface **34** positioned at a distance below the necked region **16** of the vase **12**. In this manner a substantial air gap **45** separates the top liquid solution surface **34** from the bottom surface of the barrier or cork-type arrangement. In that case, it would be desirable to provide a means for forming the cork-type arrangement within the necked region **16** without utilizing the liquid solution surface **34** as a lower boundary.

Referring now to FIGS. 6-11, in accordance with another aspect of the present invention, an arrangement is provided incorporating a supporting member **50** defining a lower bounding surface. As best shown in FIG. 7, supporting member **50** includes a base portion **52**. In the preferred embodiment the base portion **52** positioned transversely to a longitudinal axis of the container or substantially horizontally and supported by at least one upwardly extending arm **54** having hooked portion **56** draped over vase rim **19**. Preferably, the transverse base portion **52** is comprised of a rigid annular hub portion **58** having a plurality of radially-projecting outer flexible tab members **60**, and a plurality of inwardly projecting flexible tab members **62**.

As best shown in FIG. 8, outer flexible tab members **60** are particularly designed for temporarily deflecting upwards to enable passage of the base portion **52** through the narrowest part **28** of the necked region. As best shown in FIG. 8, once the support member **50** has been inserted and supported within the vase **12**, stems **22** can be inserted through a central portion of support base **52** bounded by annular hub portion **58**. During stem insertion, inner tab members **62** deflect downwardly to enable passage of the stems **22** therethrough and into the liquid solution **34**. The stems **22** are thereby supported in a substantially centralized vertical orientation within the vase.

Referring now primarily to FIG. 10, following insertion of the stems **22** into the vase **12**, the free forming bonding composition or adhesive foam **36** is preferably dispensed above support base **52** and into the interior operational space **30** through vase sidewall aperture **42**. Alternatively, the free forming bounding composition **36** can be dispensed through vase mouth **18**. The bounding composition or dispensed adhesive foam **36** readily flows and expands as heretofore described, substantially filling the operational interior space **30** of necked region **16**. The foam expands upwardly as limited by the transverse support base **52** and narrowing, or inwardly tapering, vase bounding surface **26**. As shown in FIG. 11, the free forming bonding composition solidifies to form a plug or cork member **44** within or below the narrowest portion **28** of the vase, as previously described, creating a barrier substantially sealing the contained liquid solution **32** from the surrounding environment. In this arrangement a substantial air gap **45** is provided between the lower boundary of the barrier defined by the transverse support base **52** and the top surface **34** of the liquid solution.

Referring now to FIGS. 21A-21E, in accordance with another aspect of the present invention, a floral arrangement **120** is provided for holding flowers **126** having stems **128** terminating at cut ends **130**, wherein the arrangement incorporates a flexible container **122A, 122B** which can be formed with a reinforcing or strengthening region **124** disposed about its upper periphery. As will be apparent to those skilled in the art, the flexible container can comprise myriad different shapes. For example, as shown in FIG. 21C, the container **122A** can have the shape of a conventional "zip-lock" type plastic bag. Alternatively, as shown in FIG. 21B, the flexible container **122B** can be provided having a conical shape. In any event, the flexible container is preferably filled with a nutrient-supplying liquid **32** to a level just short of the reinforcing or strengthening region **124.**

Referring briefly to FIG. 21D, strengthening region **124** can be provided having a necked configuration defined by a narrowing, or inwardly tapering, interior surface **140** which, at its upper end, defines the narrowest section **141** of the strengthening member **124**. In that case, a free flowing bonding composition is preferably introduced through opening **136** into an interior space bounded by the top surface **34** of liquid **32** and the narrowing interior surface **140** of strengthening member **124** to form a cork structure **142** within or below the narrowest portion **141** of the strengthening member **124**.

Referring briefly to FIG. 21E, an alternative reinforcing or strengthening region **150** can be provided having an interior surface **154** that is notched, serrated or otherwise irregular. In that case, a free flowing bonding composition is preferably introduced through opening **152** into an interior space bounded by the top surface **34** of liquid **32** and the interior surface **154** of the strengthening member **150**.

In this manner, a cork-type arrangement is formed creating a barrier acting to retain the contained liquid solution **32** and prevent introduction of contaminants from the surrounding environment. The cut ends **130** of the stems 128 remain submerged in the liquid solution **32** such that the stems continue to function as conduits for carrying water, minerals, sugars and other sustaining nutrients to support the flower buds and leaves.

Referring now to FIGS. 15-20, in another aspect of the present invention, a floral or botanical arrangement is provided for enabling transportation of a bunched group of plants, flowers **90** and the like, wherein cut ends **94** of the floral members or stems **92** can be maintained in a soil-free environment as illustrated in Fig. 15, or maintained in a nutrient-rich liquid composition, as will be described hereinbelow, for the duration of transport.

Referring briefly to FIGS. 15-17, initially the floral members or stems are provided in a bunched arrangement. The stems can be initially maintained bunched using any conventional tightening arrangement or elastic bands **96**. As the bunched grouping of stems is rotated, or turned, as indicated by the arrow A in FIG. 15, a free flowing bonding composition **36** which can be in the form of a foam having adhesive qualities is deposited, from an aerosol type canister **38**, for example, along a length, or segment, of the stems **92** adjacent to the cut ends **94**. As shown in FIG. 16, upon curing, the deposited adhesive composition forms an encapsulating band **98** around the stems **92** slightly above the cut ends **94** to define a lower exposed stem length or portion **93**. As used herein, the term "encapsulating band" is used to indicate that the dispensed composition not only forms a rigid band around the bunched group of stems, but also acts to encapsulate each individual stem within the composition, as most clearly illustrated in FIG. 17.

Referring now particularly to FIGS. 18-20, the bunched floral members or stems **92** can be incorporated into a floral arrangement, indicated generally by reference numeral **100**. The arrangement includes a flexible container **102** which may be formed having a collar-like strengthening or reinforcing region **106** disposed about and secured to the upper periphery **104** of the flexible container. Preferably, reinforcing region **106** incorporates a necked configuration including a narrowing, or inwardly tapering, interior surface **108** which, at its upper end, defines the narrowest section **110** of the strengthening member. The container is partially filled with nutrient-containing liquid solution **32** having an upper surface **34** that is preferably slightly below the upper periphery **104** of the flexible container **102**.

As shown in FIG. 18, the lower exposed stem portions **93**, are submerged into the liquid solution **32** in a substantially vertical orientation such that an operational interior space **112**, or gap, is defined between the stems **92** and reinforcing region surface **108**. More particularly, operational interior space **112** is bounded by stems **92**, reinforcing region surface **108** and liquid surface **34**.

A volume of free forming bonding composition or an adhesive foam **36** is preferably sprayed or otherwise dispensed into the operational interior space **112** such that, upon solidifying, the composition bonds the stems **92** to each other and to at least surface **108** of the necked strengthening member **106**. As best illustrated in FIG. 19, this arrangement forms a substantially unitary cork-type structure **99** acting as a barrier for sealing the nutrient-containing liquid solution **32** from the surrounding environment. In this manner, the arrangement provides an end-cap type containment for the lower cut ends of the stems, whereby a continuous nutrient source is provided for flower buds, leaves, etc. during transport. Additionally, the cork-type arrangement prevents contamination of the liquid solution, as previously described. As shown in FIG. 20, a clamping member **114**, such as an elastic band, cord, plastic tie and the like, can be tightly secured about strengthening member to enhance the sealing characteristics of the arrangement. Upon reaching a final shipping destination, the stems are preferably cut, or otherwise severed, above the barrier in general and reinforcing region 106 in particular. Significantly, the floral arrangement enables the shipment of floral members or flowers in a continuous "living" state absent a nutrient-supplying soil. Consequently, the floral arrangement of the present invention significantly increases the likelihood of flowers surviving during transport.

It should be obvious from the above that the invention provides an easily fabricated floral or botanical arrangement providing a soil-free continuous supply of nutrients to plants and flowers, even during an extended period of transportation, in order to increase their shelf life. The invention provides an arrangement incorporating a free-forming barrier capable of conforming to a myriad of vase and other container configurations, the arrangement in the form of a spill-proof barrier between a nutrient-supplying volume of liquid and a surrounding environment, so that the formed barrier precludes contamination of a liquid situated in the container.

Since many modifications, variations, and changes in detail can be made to the described preferred embodiments of the invention, it is intended that all matters in the foregoing description and shown in the accompanying drawings be interpreted as illustrative and not in a limiting sense. Thus, the scope of the invention should be determined by the appended claims and their legal equivalence.

## Claims

1. A floral arrangement, comprising:
a container having a mouth;
a volume of liquid solution contained in said container and having a top surface;
at least one floral projection extending through said container mouth and into said volume of liquid solution; and
a solidifying bonding composition forming a cork-type barrier within said container proximate to said mouth, said barrier firmly supporting said at least one floral projection and substantially sealing said volume of liquid solution from a surrounding environment.

2. A floral arrangement as recited in claim 1, wherein said solidifying bonding composition substantially encapsulates a length of said at least one floral projection extending therethrough.

3. A floral arrangement as recited in claim 1, wherein said container further comprises a narrowed region proximate to said container mouth, said solidifying bonding composition forming the cork-type barrier which is bounded by the top surface of said volume of liquid solution and an interior surface of said narrowed region.

4. A floral arrangement as recited in claim 3, wherein said narrowed region further comprises a necked region, and said barrier forms an inseparable combination between the at least one floral projection and an interior of the necked region.

5. A floral arrangement as recited in claim 1, wherein said solidifying bonding composition is a free flowing substance which is introduced into said container from a dispensing unit having a nozzle, the arrangement further comprising:
a necked region proximate to said container mouth;
an aperture extending through a sidewall of said container and adapted for transferring said free flowing solidifying bonding composition from said nozzle to said necked region; and
said solidifying bonding composition substantially seals said aperture.

6. A floral arrangement as recited in claim 1, wherein said liquid solution is a nutrient-containing liquid solution and said at least one floral projection is nutrient receiving floral projection, said at least one nutrient receiving floral projection further comprises a floral bulb.

7. A floral arrangement as recited in claim 1, wherein said solidifying bonding composition further comprises a free flowing adhesive foam which is introduced into said container from a dispensing unit having a nozzle.

8. A floral arrangement, comprising:
a container having a mouth terminating at a rim;
a volume of liquid solution contained in said container and having a top surface;
a member supported in said container and having a base portion disposed transversely to a longitudinal axis of the container, said base portion being positioned inside of said container at a level between said rim and the top surface of said volume of liquid solution;
at least one floral projection extending through said container mouth and through said base portion into said volume of liquid solution; and
a solidifying bonding composition forming a cork-type barrier within said container and at least partially bounded by said base portion, said barrier firmly supporting said at least one floral projection and substantially sealing said volume of liquid solution from a surrounding environment.

9. A floral arrangement as recited in claim 8, wherein an air gap separates said top surface of the liquid solution and said cork-type barrier, and at least one upwardly extending support arm is draped over the rim of said container mouth.

10. A floral arrangement as recited in claim 9, wherein said container has a necked region proximate to the container mouth, the transverse base portion of said member further comprising:
a rigid annular hub; and
a plurality of outer flexible tab members projecting radially from said annular hub;
said outer flexible tab members configured to temporarily deflect inwardly to enable passage of said base portion through said necked region.

11. A floral arrangement as recited in claim 10, further comprising a plurality of inner flexible tab members projecting inwardly from said annular hub, said inner flexible tab members configured to deflect downwardly to enable passage of said at least one nutrient-receiving floral projection therethrough.

12. A floral arrangement as recited in claim 8, wherein said solidifying bonding composition is introduced into said container from a dispensing unit having a nozzle, the arrangement further comprising:
an aperture extending through a sidewall of said container and configured for receiving said solidifying bonding composition therethrough;
said solidified bonding composition substantially plugging said aperture.

13. A floral arrangement as recited in claim 8, wherein said solidified bonding composition further comprises a free flowing adhesive foam.

14. A floral arrangement comprising:
a plurality of flowers having stem portions extending distally therefrom in a bunched arrangement, each said stem portion terminating at a cut end;
a flexible container having an opening;
a volume of liquid solution within said container and having a top surface;
said cut ends of said stem portions extending through said container opening and into said volume of liquid solution;
a solidifying bounding composition engaging said opening of the flexible container and said stem portions above and proximate to said cut ends, so as to form a cork-type barrier within said container proximate to said opening encapsulating said stem portions and sealing said volume of liquid solution from a surrounding environment.

15. A floral arrangement as recited in claim 14, wherein said solidifying bounding composition further comprises an adhesive foam.

16. A floral arrangement as recited in claim 14, further comprising a strengthening member extending about said container opening, wherein said solidifying bounding composition adhesively engages said strengthening member.

17. A floral arrangement as recited in claim 16, wherein said strengthening member has a neck configuration defining an inwardly tapering surface.

18. A floral arrangement as recited in claim 17, wherein said solidified bounding composition is bounded by the top surface of said volume of liquid solution and the inwardly tapering surface of said strengthening member.

19. The floral arrangement as recited in claim 18, wherein said strengthening member is formed having a notched interior surface.

20. A method of fabricating a floral arrangement, comprising the steps of:
providing a container having a mouth;
filling said container with a volume of liquid solution having a top surface;
inserting at least one nutrient-receiving floral projection through said container mouth and into said volume of liquid solution; and
forming a cork-type barrier within said container substantially sealing said volume of liquid solution from a surrounding environment.

21. A method as recited in claim 20, wherein the step of forming a cork-type barrier further comprises introducing a non-solidified bonding composition into said container above the top surface of said volume of liquid solution.

22. A method as recited in claim 21, wherein said non-solidified bonding composition is introduced through a container sidewall aperture.

23. A method as recited in claim 20, wherein said container has a narrowed region proximate said container mouth and the step of forming further comprises forming a cork-type barrier bounded by the top surface of said liquid solution and an interior container surface within said narrowed region.

24. A method as recited in claim 21, wherein said non-solidified bonding composition is a free flowing adhesive foam.

25. A method as recited in claim 20 further comprising, prior to the step of inserting, the step of positioning a transverse support member within said container at a distance above the top surface of said liquid solution.

26. A method as recited in claim 25, wherein the step of inserting further comprises extending said at least one floral projection through said support member such that said member supports said at least one floral projection in a substantially vertical orientation, and the step of forming further comprises introducing a non-solidified bonding composition into said container above said transverse support member.

27. A method as recited in claim 20, wherein said container further comprises a flexible bag having an opening and a strengthening member extending thereabout.

28. A method as recited in claim 27, wherein the step of forming a cork-type barrier further comprises introducing a non-solidified bonding composition into said container above the upper surface of said volume of liquid solution such that said non-solidified bonding composition bonds to said strengthening member.

29. A method of fabricating a floral arrangement, comprising the steps of:
forming a bunched grouping of floral stems having cut ends;
providing a flexible container having an opening;
filling said flexible container with a volume of liquid solution having a top surface;
inserting the cut ends of said floral stems through said container opening and into said liquid solution; and
adhesively bonding said floral stems to said opening in a manner forming a cork-type barrier within said container substantially sealing said volume of liquid solution from a surrounding environment.

30. A method as recited in claim 29, wherein the step of adhesively bonding further comprises introducing a non-solidified bonding composition between said opening and said floral stems.

31. A method as recited in claim 30, wherein said non-solidified bonding composition is a free flowing adhesive foam.

32. A method as recited in claim 31, further comprising the step of providing a clamping member about said opening of the container.
